# EUROPEAN PATENT SPECIFICATION

(11) **EP 1 933 062 B1**
(45) Date of publication and mention of the grant of the patent: **17.11.2010**
(21) Application number: 06026045.2
(22) Date of filing: 15.12.2006
(51) Int. Cl.: F16H 61/26

(54) **A manual gear shifting system**
Manuelles Schaltsystem für Getriebe
Système de changement de vitesses manuel

(43) Date of publication of application: 18.06.2008
(73) Proprietor: Kongsberg Automotive AS, 3601 Kongsberg (NO)
(72) Inventor: Melander, Ingemar, 56593 Mullsjö (SE)
(74) Representative: UEXKÜLL & STOLBERG

(56) References cited:
- DE-A1- 19 509 475
- DE-A1- 19 613 908
- GB-A- 891 400
- US-A- 2 186 483
- US-A- 4 850 733

## Description

The invention relates to a manual gear shifting system, comprising a gear lever mounted for movement along a first axis and a second axis orthogonal to the first axis, and a shift shaft coupled to the gear lever and to a gearbox for transferring a rotational and longitudinal movement along its axis in response to gear lever movements along the first and second direction, the shift shaft comprising an adjustment section having a first tubular member and a second tubular member, the second tubular member being arranged coaxially to and being at least partially received within said first tubular member, and a releasable clamping mechanism for securing the first and second tubular members to each other at a desired relative rotational and translational positioning.

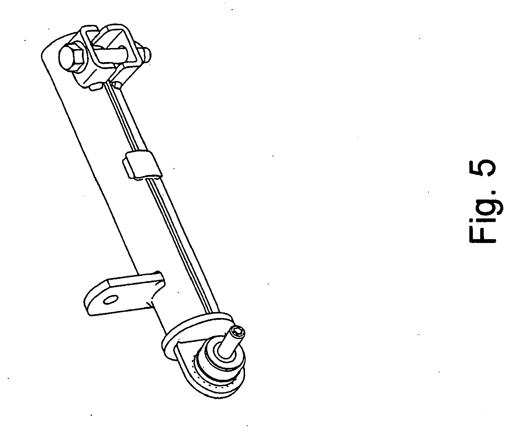

Manual gear shifting systems utilising a gear lever are widely known. The gear lever is mounted for movement along a first and a second direction orthogonal to the first direction, for effecting gear selection and shifting movements. The movements of the gear lever are transferred by a shift shaft to a gearbox, the shift shaft being capable of rotational and translational movement along its longitudinal axis, wherein these movements are effected by movements of the gear lever in the first and second directions. In order to accommodate for manufacturing tolerances and mounting tolerances of the members that effect the transfer of movements from the gear lever to the components driven by said movements in the gearbox, an adjustment is needed to adjust the positioning of the gear lever to the components ultimately driven by the gear lever. To achieve this it is known to provide the shift shaft with an adjustment section having a first tubular member and a second tubular member, wherein the second tubular member is arranged coaxially to and is partially received within said first tubular member, and having a releasable clamping mechanism for securing the first and second tubular members to each other at a desired relative rotational and translational positioning. An example of such adjustment section is shown in Figure 5 which illustrates a first tubular member which is capable to receive a second tubular member (not shown). The first tubular member comprises a split tube with a clamping mechanism at one of its ends, the clamping mechanism comprising a tightening screw which allows to radially compress the parts of the split tubular first member which allows to frictionally engage or clamp the second tubular member therein at a desired relative rotational and translational positioning.

Another example of a manual gear shift system having a shift shaft with an adjustment mechanism as in the preamble of claim 1 is described in WO 2005/007442 A1. The shift shaft comprises a gear shift rod that is received in a hollow first tubular member with one of its ends. The first tubular member comprises a tube section with a slot extending from the open end in which the shift rod is received. The first tubular member is engaged by an annular clamping member on its outer surface which is capable of clamping the first tubular member such that its inner diameter is reduced in order to clamp or frictionally engage the received end of the shift rod.

In both prior art adjustment sections the clamping mechanism is arranged outside or external to the first tubular member in order to exert a compressing force thereon. As a result, this mechanism needs extra space around an adjustment section of the shift shaft. In modern car industry, there is an increasing demand to minimise any space requirements outside of the passenger cabin. Accordingly, it would be desirable to provide a manual gear shift system that allows a more compact construction of the shifting and adjustment mechanism.

DE 196 13 908 A1 discloses a manual gear shifting system according to the preamble of Claim 1. The clamping mechnism disclosed therein is actuated by applying an external tool through a lateral opening in the first gear shaft portion.

US 2,186,483 and US 4,850,733 refer to saddle connections for bicycles including an expander with a conical element.

Accordingly, it is an object of the present invention to provide a manual gear shift system, but it is of simple and compact construction and allows a relative positioning adjustment of the movable parts thereof.

According to the present invention the clamping mechanism is arranged to effect an expansion of the second tubular member for clamping said second tubular member inside said first tubular member (2). This allows that the clamping mechanism is entirely or at least to a large extend disposed within the second tubular member.

Furthermore, the clamping mechanism comprises a conical element located at least partially inside the second tubular member. A screw is provided that is in engagement with an inner thread of the conical element and that extends to the outside of the second tubular element. By tightening the screw a longitudinal movement of the conical element further inside of the second tubular member may be effected, thereby effecting an expansion of the second tubular member for frictionally engaging or clamping said second tubular member inside said first tubular member. Obviously, by loosening the screw the clamping may be released if a new relative positioning is desired. Thus, the design of the present invention does not require presence of any components outside the perimeter of the second tubular member whereby a more space-effective compact design is accomplished.

In a preferred embodiment the screw is positioned coaxially with respect to the conical element, and the latter is positioned coaxially with respect to the second tubular element.

According to the present invention, the inner wall of the second tubular member is tapering from the end receiving the conical element to the element through which a screw is extending, wherein the tapering inner walls conform to the outer surface of said conical element.

In a further preferred embodiment, the second tubular member has at least one slot extending from the end receiving the conical element and being essentially parallel to its longitudinal axis to facilitate expansion of the second tubular member.

According to the present invention, the outer conical surface of the conical element is provided with a ridge or rip to prevent rotational movement thereof within said first tubular member.

The screw may be extending through a hole in plate, wherein one end of said second tubular member is abutting against said plate on one side thereof and a head of said screw is abutting against said plate on its other side.

The adjustment section may be located at either of the ends, either close to the gearbox or close to the gear lever, i.e. said plate is part of a member that is coupled to the gear lever or is part of an attachment member that is fixed to the gearbox.

The conical element may be made of a sintered material which is impregnated. This avoids any maintenance with respect to lubrification.

The outer surface of the second tubular member and/or the inner surface of the first tubular member may be structured, e.g. knurled, in order to enhance their frictional engagement.

The invention will in the following be further described in connection with embodiments shown in the drawings, in which:
Figure 1 shows an exploded view of the adjustment section of the shift shaft of the gear shifting system, showing components thereof separated;
Figure 2 shows an embodiment of the shift shaft with the adjustment section located close to the gear shift system in plan views from the top and the side;
Figure 3 shows an embodiment of the shift shaft with the adjustment section located close to the gearbox in plan views from the top and the side;
Figure 4 shows a schematical sectional view of the adjustment section of the shift shaft of the gear shifting system; and
Figure 5 illustrates a part of an adjustment section of the shift shaft according to the prior art.

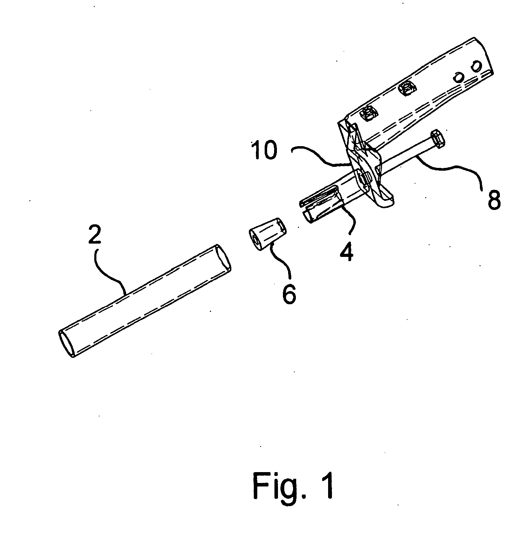

Figure 1 shows a schematical representation of the components of the adjustment section of the shift shaft used in the gear shifting system. The adjustment mechanism comprises a first or outer tubular member 2, a conical element 6 which is received in the opening of the inner or second tubular member 4. Through the other end of the second tubular element 4 a screw 8 is inserted which engages an inner thread of the conical element 6. The longitudinal movement of the screw 8 with respect to the second tubular member 4 is in some manner limited, for example by a screw head which abuts against a plate which is provided at the end of the second tubular member 4 and which has a hole through which the stem of the screw extends. By turning the screw 8 in tightening direction the conical element 8 is further pulled to the inside of the second tubular member 4 which causes the outer surface of the second tubular member 4 to expand. In order to facilitate this expansion, the second tubular member 4 may be provided with slots extending from the opening through which the conical element 6 is inserted. By tightening the screw 8 and thereby pulling the conical element 6 inside, the expanding second tubular element 4 gets into frictional engagement with the surrounding first tubular element 2 to clamp the second tubular member 4 at a desired rotational and translational positioning with respect to the first tubular member 2. Of course, the clamping mechanism may be released by turning the screw 8 in the opposite sense to the tightening movement.

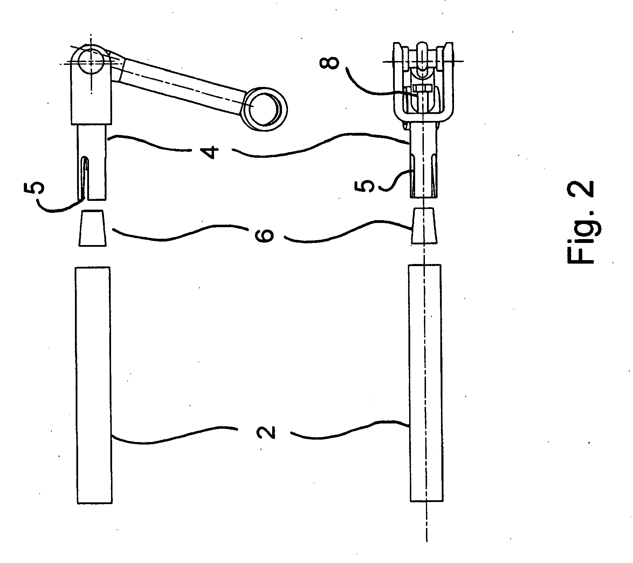

Figure 2 shows an illustration where the adjustment section is located close to the gear lever. In particular, the head of the tightening screw 8 is resting on one side of the plate 10 which is part of a bracket that is in turn pivotably connected to an inner part of the gear lever. Against the other side of this plate, one end of the second tubular member 2 is abutting. The second tubular member 4 is received within the first tubular member 2. By tightening the screw 8 and thereby expanding the second tubular member 2, the latter is clamped or frictionally engaged against the inner wall of said first tubular element.

The outer surface of the conical element 6 may be provided with a longitudinal ridge to prevent the conical element from rotating when the tightening screw 8 is turned. This ridge may for example be received in one of the slots 5 to provide a locking engagement of the conical element 6 against rotation.

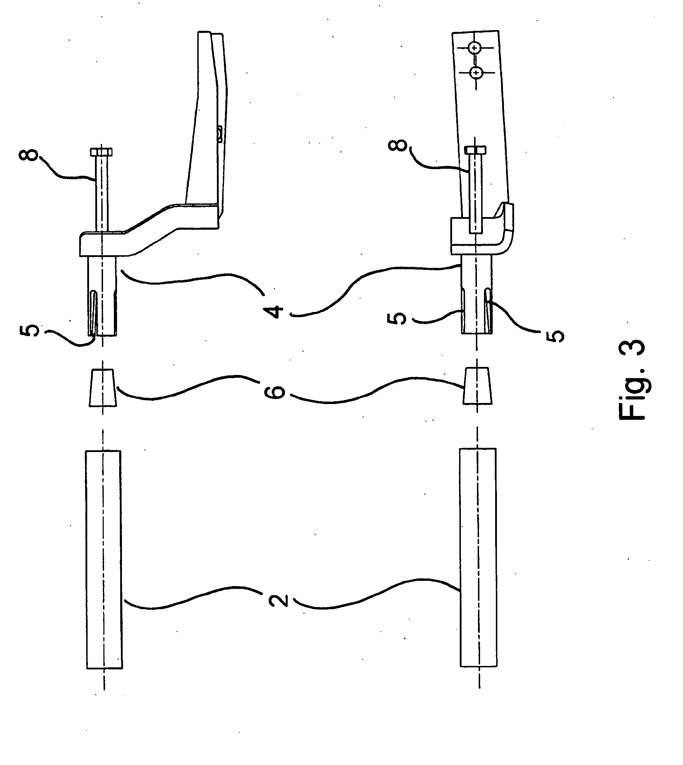

Figure 3 shows an arrangement where the adjustment section of the shift shaft is located close to the gearbox. The same parts are designated by the same reference numerals as in Figures 1 and 2. Here the plate 10' is part of the attachment member which is adapted to be fixed to the gearbox.

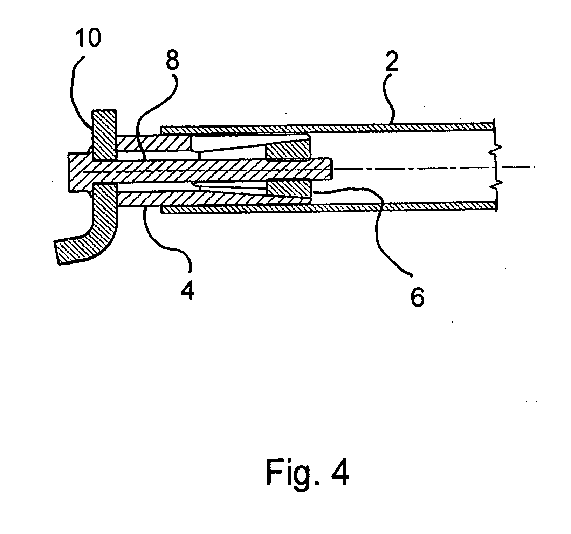

Figure 4 shows a sectional view of the adjustment section of the gear shift system. The inner or second tubular member 4 is received within one end of the outer or first tubular member 2. A conical element 6 is received in the inner end of the second tubular member 4 which is received in the first tubular member 2. A screw 8 is extending through the second tubular member 4 in a coaxial manner and engages an inner thread of the conical element 6. At its outer end the screw 8 is resting with its head on a plate 10 which is part of a attachment member which may be either further coupled to the gearbox or the gear lever. Against the inner side of the plate 10 the outer end of the second tubular member 4 is abutting. In this embodiment the second tubular member 4 is provided with a tapering, converging inner wall, with decreasing diameter from the end receiving the conical element 6. By tightening the screw 8 the conical element is pulled further inside of the second tubular element 4, thereby expanding the latter and causing it to get in frictional engagement or clamping contact with the inner wall of the first tubular element 2.

## Claims

1. A manual gear shifting system, comprising
a gear lever mounted for movement along a first axis and a second axis orthogonal to the first axis,
a shift shaft coupled to the gear lever and to a gearbox for transferring a rotational and longitudinal movement along its axis in response to gear lever movements along the first and second direction, the shift shaft comprising an adjustment section having a first tubular member (2) and a second tubular member (4), the second tubular member being arranged coaxially to and being at least partially received within said first tubular member (2), and a releasable clamping mechanism for securing the first and second tubular members to each other at a desired relative rotational and translational positioning,
wherein the clamping mechanism effects an expansion of the second tubular member for clamping said second tubular member inside said first tubular member (2), **characterised in that**
the clamping mechanism comprises a conical element (6) located at least partially inside of the second tubular member (4) and a screw (8) engaging an inner thread of the conical element (6) so that, by tightening the screw, a longitudinal movement of the conical element (6) further inside of the second tubular member (4) is effected,
the inner wall of said second tubular element (4) is tapering to conform to the outer surface of said conical element, and
the conical surface of said conical element is provided with a ridge to prevent rotational movement thereof within said first tubular member.

2. A manual gear shifting system according to claim 1, **characterised in that** the screw (8) is positioned coaxially with respect to the conical element (6), and that said conical element (6) is positioned coaxially with respect to the second tubular element (4).

3. A manual gear shifting system according to any preceding claim, **characterised in that** said second tubular member (4) has at least one slot (5) extending from an open end thereof and parallel to the longitudinal axis of said second tubular element (4) to facilitate expansion of the second tubular member.

4. A manual gear shifting system according to claims 2 or 3, **characterised in that** said screw is extending through a hole in a plate (10, 10'), wherein one end of said second tubular member (4) is abutting against said plate on one side thereof and a head of said screw (8) is abutting against said plate on its other side.

5. A manual gear shifting system according to claim 4, **characterised in that** said plate is part of a bracket (12) that is pivotably coupled to the gear lever.

6. A manual gear shifting system according to claim 4, **characterised in that** said plate is part of an attachment member (14) that is fixed to the gearbox.

7. A manual gear shifting system according to any preceding claim, **characterised in that** the outer surface of the second tubular member and/or the inner surface of the first tubular member is structured in order to enhance their frictional engagement.

8. A manual gear shifting system according to any preceding claim, **characterised in that** the conical element is be made of a sintered material which is impregnated.

## Patentansprüche

1. Manuelles Gangschaltsystem mit
einem Schalthebel, der beweglich entlang einer ersten Achse und einer zweiten, zur ersten senkrechten Achse gelagert ist,
einer Schaltwelle, die mit dem Schalthebel und einem Getriebe gekoppelt ist, um eine Drehbewegung und eine Längsbewegung entlang ihrer Welle in Reaktion auf Schalthebelbewegungen entlang der ersten und der zweiten Richtung zu übertragen, wobei die Schaltwelle einen Einstellabschnitt mit einem ersten rohrförmigen Teil (2) und einem zweiten rohrförmigen Teil (4), wobei das zweite rohrförmige Teil koaxial zu und wenigstens teilweise innerhalb des ersten rohrförmigen Teils (2) aufgenommen angeordnet ist, und einen lösbaren Spannmechanismus zum Festsetzen der ersten und zweiten röhrförmigen Teile in einer gewünschten relativen Dreh- und Längsstellung zueinander aufweist,
wobei der Spannmechanismus eine Ausdehnung des zweiten rohrförmigen Teils zum Einspannen des zweiten rohrförmigen Teils innerhalb des ersten rohrförmigen Teils (2) bewirkt, **dadurch gekennzeichnet, dass**
der Spannmechanismus ein konisches Element (6), das wenigstens teilweise innerhalb des zweiten rohrförmigen Teils (4) angeordnet ist, und eine Schraube (8) aufweist, die in ein Innengewinde des konischen Elements (6) eingreift, so dass durch Anziehen der Schraube eine Längsbewegung des konischen Elements weiter in das Innere des zweiten rohrförmigen Teils (4) bewirkt wird,
die Innenwand des zweiten rohrförmigen Elements (4) sich verjüngt, um sich der äußeren Oberfläche des konischen Elements anzupassen, und
die konische Oberfläche des konischen Elements mit einem Grat versehen ist, um eine Drehbewegung des konischen Elements innerhalb des ersten rohrförmigen Teils zu verhindern.

2. Manuelles Gangschaltsystem nach Anspruch 1, **dadurch gekennzeichnet, dass** die Schraube (8) koaxial in Bezug auf das konische Element (6) positioniert ist und dass das konische Element (6) koaxial in Bezug auf das zweite rohrförmige Element (4) positioniert ist.

3. Manuelles Gangschaltsystem nach einem der vorhergehenden Ansprüche, **dadurch gekennzeichnet, dass** das zweite rohrförmige Teil (4) wenigstens einen Schlitz (5) hat, der sich von dessen offenen Ende und parallel zu der Längsachse des zweiten rohrförmigen Teils (4) erstreckt, um die Ausdehnung des zweiten rohrförmigen Teils zu erleichtern.

4. Manuelles Gangschaltsystem nach Anspruch 2 oder 3, **dadurch gekennzeichnet, dass** die Schraube durch ein Loch in einer Platte (10') hindurch verläuft, wobei ein Ende des zweiten rohrförmigen Teils (4) an einer Seite der Platte anliegt und ein Kopf der Schraube (8) an der Platte an ihrer anderen Seite anliegt.

5. Manuelles Gangschaltsystem nach Anspruch 4, **dadurch gekennzeichnet, dass** die Platte Teil eines Trägers (12) ist, der schwenkbar mit dem Schalthebel gekoppelt ist.

6. Manuelles Gangschaltsystem nach Anspruch 4, **dadurch gekennzeichnet, dass** die Platte Teil eines Befestigungselements (14) ist, das an dem Getriebe angebracht ist.

7. Manuelles Gangschaltsystem nach einem der vorhergehenden Ansprüche, **dadurch gekennzeichnet, dass** die äußere Oberfläche des zweiten rohrförmigen Teils und/oder die innere Oberfläche des ersten rohrförmigen Teils oberflächenstrukturiert sind, um ihren Reibschluss zu erhöhen.

8. Manuelles Gangschaltsystem nach einem der vorhergehenden Ansprüche, **dadurch gekennzeichnet, dass** das konische Element aus einem gesinterten Material hergestellt ist, das imprägniert ist.

## Revendications

1. Dispositif de changement manuel de vitesses, comprenant
- un levier de vitesse monté pour réaliser un mouvement le long d'un premier axe et d'un second axe perpendiculaire au premier axe ;
- un arbre de changement couplé au levier de vitesses et à une boite de vitesses pour transférer un mouvement de rotation et longitudinal le long de son axe en réponse à des mouvements du levier de vitesses le long de la première et seconde direction, l'arbre de changement comprenant une section de réglage ayant un premier élément tubulaire (2) et un second élément tubulaire (4), le second élément tubulaire étant agencé coaxialement et étant au moins partiellement reçu à l'intérieur dudit premier élément tubulaire (2), et un moyen de serrage amovible pour serrer les premier et second éléments tubulaires l'un à l'autre à une position relative en rotation et en translation ;
- dans lequel le mécanisme de serrage réalise une expansion du second élément tubulaire pour serrer ledit second élément tubulaire à l'intérieur dudit premier élément tubulaire (2),
**caractérisé en ce que**
- le mécanisme de serrage comprend un élément conique (6) situé au moins partiellement à l'intérieur du second élément tubulaire (4) et une vis (8) engagée avec un filetage interne de l'élément conique (6) de manière à ce que, par serrage de la vis, un mouvement longitudinal de l'élément conique (6) plus loin à l'intérieur du second élément tubulaire (4) soit effectué ;
- la paroi interne dudit second élément tubulaire (4) est conique pour se conformer à la surface externe dudit élément conique ; et
- la surface conique dudit élément conique comprend une nervure pour éviter un mouvement de rotation de celui-ci à l'intérieur dudit premier élément tubulaire.

2. Dispositif de changement manuel de vitesses selon la revendication 1, **caractérisé en ce que** la vis (8) est positionnée coaxialement par rapport à l'élément conique (6), et **en ce que** ledit élément conique (6) est positionné coaxialement par rapport au second élément tubulaire (4).

3. Dispositif de changement manuel de vitesses selon l'une quelconque des revendications précédentes, **caractérisé en ce que** ledit second élément tubulaire (4) a au moins une fente (5) s'étendant depuis une extrémité ouverte de celui-ci et parallèle à l'axe longitudinal dudit second élément tubulaire (4) pour faciliter l'expansion dudit second élément tubulaire.

4. Dispositif de changement manuel de vitesses selon les revendications 2 ou 3, **caractérisé en ce que** ladite vis s'étend à travers un orifice dans une plaque (10, 10'), dans laquelle une extrémité dudit second élément tubulaire (4) est en butée contre ladite plaque sur une extrémité de celle-ci et une tête de ladite vis (8) est en butée contre ladite plaque sur son autre côté.

5. Dispositif de changement manuel de vitesses selon la revendication 4, **caractérisé en ce que** ladite plaque est une partie d'un support (12) qui est couplé à pivotement au levier de vitesses.

6. Dispositif de changement manuel de vitesses selon la revendication 4, **caractérisé en ce que** ladite plate est une partie d'un élément d'attache (14) qui est fixé à la boite de vitesses.

7. Dispositif de changement manuel de vitesses selon l'une quelconque des revendications précédentes, **caractérisé en ce que** la surface externe du second élément tubulaire et/ou la surface interne du premier élément tubulaire est configurée de manière à favoriser leur engagement par friction.

8. Dispositif de changement manuel de vitesses selon l'une quelconque des revendications précédentes, **caractérisé en ce que** l'élément conique est réalisé dans un matériau fritté qui est imprégné.
